# EUROPÄISCHE PATENTANMELDUNG

(11) **EP 4 573 989 A1**
(43) Veröffentlichungstag der Anmeldung: **25.06.2025**
(21) Anmeldenummer: 24214426.9
(22) Anmeldetag: 21.11.2024
(51) Int. Cl.: A47J 31/46, A47J 31/44

(54) **MILCHMODUL MIT OPTIMIERTER WÄRMEÜBERTRAGUNG, BETRIEB EINES MILCHMODULS MIT OPTIMIERTER WÄRMEÜBERTRAGUNG UND GETRÄNKEZUBEREITUNGSVORRICHTUNG MIT OPTIMIERTEM MILCHMODUL**

(30) Priorität: 22.12.2023 DE 102023136597
(71) Anmelder: Eugster/Frismag AG, 8580 Amriswil (CH)
(72) Erfinder: Frei, Nicolas, 9320 Arbon (CH); Sonderegger, Remo, 8274 Tägerwilen (CH); Stutz, Dieter, 9565 Bussnang (CH)
(74) Vertreter: Patent- und Rechtsanwälte Behrmann Wagner PartG mbB

(57) **Zusammenfassung**

Die Erfindung betrifft ein Milchmodul für Getränkezubereitungsvorrichtungen, insbesondere Kaffee- und/oder Espressomaschinen, zur Erwärmung von Milch mit einer Milchpumpe (04) zur Förderung eines Volumenstroms von einem Einlass (02) zu einem Auslass (03) des Milchmoduls (01). Erfindungsgemß ist vorgesehen, dass die Milchpumpe (04) lediglich dazu eingerichtet ist den Volumenstrom zu erzeugen, wobei zusätzlich zur Milchpumpe (04) eine Wirbelkammer (09) vorgesehen ist, wobei der Einlass (02) fluidleitend mit einer Eintrittsöffnung (11) der Wirbelkammer (09) und der Auslass (03) fluidleitend mit einer Austrittsöffnung (12) der Wirbelkammer (09) verbunden ist und eine Zuleitung (20) in die Wirbelkammer (09) mündet, mit der eine Wärmeträgerfluid in die Wirbelkammer (09) einleitbar ist, so dass der die Wirbelkammer (09) durchfließende Volumenstrom durch das Wärmeträgerfluid verwirbelt und dabei erwärmt wird.

## Beschreibung

Die vorliegende Erfindung betrifft ein Milchmodul für Getränkezubereitungsvorrichtungen, insbesondere Kaffee- und/oder Espressomaschinen, zur Erwärmung und/oder Aufschäumung von Milch. Ferner betrifft die vorliegende Erfindung eine Getränkezubereitungsvorrichtung mit samt eines solchen Milchmoduls. Weiterhin betrifft die vorliegende Erfindung eine Verfahren zum Betrieb eines Milchmoduls für Getränkezubereitungsvorrichtungen, insbesondere Kaffee- und/oder Espressomaschinen.

Aus dem Stand der Technik sind verschiedenste Milchmodule für Getränkezubereitungsvorrichtungen bekannt. In der Regel aber keinesfalls ausschließlich werden solche Milchmodule bei Kaffeeautomaten oder sogenannten Kaffeevollautomaten eingesetzt, die unterschiedliche Getränkespezialitäten, insbesondere Kaffeevariationen herstellen und ausgeben können. Durch das Milchmodul kann Milch und Milchersatzstoffe, wie beispielsweise pflanzenbasierte Milchersatzstoffe, erwärmt und/oder aufgeschäumt werden und als selbstständiges Getränk oder als Zutat eines Getränks, beispielsweise einer Kaffeespezialität, ausgeben werden.

Ein Großteil der Milchmodule aus dem Stand der Technik basiert auf dem Prinzip einer Venturi-Düse oder Strahlpumpe. Dabei wird Wasserdampf und/oder heißes Wasser mit einem entsprechenden Überdruck durch eine Venturi-Düse gefördert. Der dabei entstehende Unterdruck an einer an die Venturi-Düse angeschlossenen Milchleitung führt dazu, dass die Milch angesaugt wird und ein Milchvolumenfluss erzeugt wird. Ausgangsseitig der Venturi-Düse führt eine Vermischung des Wasserdampfs und/oder heißen Wassers als Pumpfluid und Wärmeträgerfluid mit der Milch dazu, dass die angesaugte Milch erwärmt und aufgeschäumt wird.

Derartige Milchmodule sind überaus weitverbreitet, weil durch das unter Druck stehende Wärmeträgerfluid, insbesondere Wasserdampf oder eine Mischung aus Wasserdampf und Heißwasser sowohl die Pumpenfunktionalität als auch die Aufschäum- und/oder Erwärmungswirkung bereitgestellt werden kann.

Nachteilig an den bekannten Ansätzen auf der Basis des Venturi-Effekts ist, dass das Wärmeträgerfluid mit einem entsprechend hohen Überdruck bereitgestellt werden muss, was sowohl besondere Anforderungen an die beteiligten Gerätekomponenten stellt und darüber hinaus relativ viel Energie benötigt. Weiterhin sind derartige Konzepte im Betrieb sehr laut, insbesondere im Vergleich zu den sonstigen Betriebsgeräuschen derartiger Getränkezubereitungsvorrichtungen. Weiterhin wird für die Förderung, Erwärmung und/oder Aufschäumung von Milch auf der in Grundlage von Venturi-Düsen verhältnismäßig viel Bauraum benötigt.

Vor diesem Hintergrund ist es die Aufgabe der vorliegenden Erfindung ein Milchmodul, eine Getränkezubereitungsvorrichtung mit einem Milchmodul und ein Verfahren zum Betrieb eines Milchmoduls vorzuschlagen, die die Nachteile im Stand der Technik überwinden und insbesondere die vorherrschenden Drücke im Milchmodul und dazugehörigen Zuliefer- oder Versorgungskomponenten verringern, die Lautstärke im Betrieb reduzieren und den benötigten Bauraum minimieren.

Diese Aufgabe wird im Hinblick auf das Milchmodul mit den Merkmalen des Anspruchs 1 gelöst. Bezüglich einer Getränkezubereitungsvorrichtung wird die genannte Aufgabe mit den Merkmalen des Anspruchs 14 gelöst.

Im Hinblick auf das Verfahren wird die Aufgabe mit einem Verfahren mit den Merkmalen des Anspruchs 15 gelöst.

Vorteilhafte Ausführungsformen der Erfindung sind Gegenstand der nachfolgenden Beschreibung, der Figurenbeschreibung, der Figuren sowie der Unteransprüche.

Auch zur Vermeidung von unnötigen Wiederholungen sollen nachfolgend alle Vorrichtungsmäßig offenbarten Merkmale auch als entsprechend verfahrensmäßig offenbart und beanspruchbar gelten, und umgekehrt.

Das erfindungsgemäße Milchmodul für Getränkezubereitungsvorrichtungen, insbesondere Kaffee- und/oder Espressomaschinen, zur Erwärmung und/oder Aufwärmung von Milch umfasst eine Milchpumpe zur Förderung eines Volumenstroms von Milch von einem Einlass zu einem Auslass des Milchmoduls. Erfindungsgemäß ist dabei vorgesehen, dass die Milchpumpe lediglich dazu eingerichtet ist, den Volumenstrom zu erzeugen, wobei zusätzlich zur Milchpumpe eine Wirbelkammer vorgesehen ist, wobei der Einlass fluidleitend mit einer Eintrittsöffnung der Wirbelkammer und der Auslass fluidleitend mit einer Austrittsöffnung der Wirbelkammer verbunden ist und eine Zuleitung in die Wirbelkammer mündet, mit der ein Wärmeträgerfluid in die Wirbelkammer einleitbar ist, sodass der die Wirbelkammer durchfließende Volumenstrom von Milch durch das Wärmeträgerfluid verwirbelt, insbesondere innerhalb der Wirbelkammer verwirbelt wird, und dabei erwärmt wird.

Die Erfindung basiert damit auf den Grundgedanken, dass auf der Vorrichtungsebene oder auf der Bauteil-/Komponentenebene die Förderung der Milch oder das Erzeugen des Volumenstroms von Milch und das Erwärmen der Milch zu entkoppeln oder zu separieren. Dabei wurde in überraschender Weise festgestellt, dass zwar grundsätzlich mehr Bauteile oder Komponenten notwendig sind, nämlich eine Pumpe und eine Wirbelkammer - sowie gegebenenfalls noch eine zusätzliche Aufschäumvorrichtung - statt lediglich einer Strahlpumpe oder Venturi-Pumpe, die die Pumpfunktion und die Erwärmungs- und/oder Aufschäumwirkung bereitstellt, gleichzeitig aber trotz der erhöhten Anzahl an Bauteilen/Komponenten insgesamt die Vorteile gegenüber dem Stand der Technik dominieren, weil nunmehr insgesamt sowohl bei der Förderung der Milch als auch beim Erwärmen der Milch deutlich geringere Drücke zum Betrieb ausreichend sind und dementsprechend die Bauteile/Komponenten anders dimensioniert, konzipiert und ausgelegt werden können und weniger Energie benötigen. Weiterhin wurde festgestellt, dass bei der Separierung der Funktionalität die Lautstärke im Betrieb deutlich gesenkt werden kann und insbesondere die Erwärmung der Milch sehr effektiv auf kleinstem Raum stattfinden kann.

Nachfolgend sollen grundsätzlich alle eiweißhaltigen tierischen und pflanzlichen Lebensmittel-Produkte, die erwärmt und aufschäumbar sind, als Milch im Sinne der vorliegenden Beschreibung gelten. Dies umfasst zum Beispiel Soja-Milch, Mandel-Milch, Hafer-Milch, Kuh-Milch oder dergleichen.

Im Sinne der Erfindung wird die Milch in der Wirbelkammer erwärmt. Sofern eine Aufschäumung der Milch zusätzlich erwünscht ist, kann dies zum Beispiel über einen porösen Membranschäumer, einen mechanischen Schäumer oder einer alternativen, bekannten Aufschäumvorrichtung erfolgen, die dann dem in Flussrichtung der Milch dem Ausgang der Wirbelkammer oder dem Ausgang des Milchmoduls nachgeordnet angeordnet ist.

Als Einlass des Milchmoduls soll im Wesentlichen ein Übergang oder eine Schnittstelle zu einem Milchbevorratungsbehälter verstanden werden. Als Auslass des Milchmoduls kann in der Regel ein Ausgabeauslass verstanden werden, von dem aus die Milch in ein Gefäß, insbesondere ein Getränkegefäß, abgegeben wird. Als Milchpumpe eignet sich grundsätzlich jede Fluid- oder Flüssigkeitspumpe, die in der Lage ist im Lebensmittelbereich eingesetzt zu werden, um Lebensmittel sicher zu fördern. Die fluidleitenden Verbindungen zwischen Einlass und Wirbelkammer sowie Auslass und Wirbelkammer können beispielsweise durch entsprechende Rohrleitungen, Schlauchverbindungen oder dergleichen ausgebildet sein. Auch diese müssen in aller Regel, da sie unmittelbar mit der Milch in Berührung kommen entsprechend lebensmitteltauglich und reinigbar sein.

Auch die Zuleitung kann über eine Rohrleitung oder eine Schlauchverbindung realisiert sein. Da das durch die Zuleitung bereitgestellte Wärmeträgerfluid, beispielsweise Wasserdampf und/oder Heißwasser, mit der Milch in Kontakt kommt, ist auch die Zuleitung so auszugestalten, dass diese lebensmittelverträglich ist.

Die Funktionsweise des Milchmoduls sieht also vor, dass mit der Milchpumpe ein Volumenstrom der Milch erzeugt wird, der über die Eintrittsöffnung in die Wirbelkammer eintritt, wobei gleichzeitig oder zumindest zeitlich überlappend auch das Wärmeträgerfluid über die Zuleitung in die Wirbelkammer eintritt. Die Wirbelkammer und insbesondere die Zuleitung sind dabei so gestaltet, dass die Milch vor dem Austritt durch die Austrittsöffnung für eine gewisse Zeit in der Wirbelkammer verwirbelt und dabei mit dem Wärmeträgerfluid vermischt wird, sodass beim Austritt der Milch aus der Austrittsöffnung der Wirbelkammer eine Vermischung und/oder ein Wärmeübertrag auf die Milch stattgefunden hat. Auf vorteilhafte Ausgestaltungen der Wirbelkammer wird im weiteren Verlauf der Beschreibung noch eingegangen werden.

Eine erste vorteilhafte Ausführungsform der Erfindung kann vorsehen, dass die Eintrittsöffnung und bevorzugt auch ein daran anschließender Endabschnitt der Verbindung zwischen Eintrittsöffnung und Einlass, so ausgebildet und ausgerichtet ist, dass der Volumenstrom der Milch tangential zu einer Wirbelrichtung in die Wirbelkammer eintritt. Dies hat den Vorteil, dass dadurch die Milch beim Eintritt in die Wirbelkammer zunächst kaum eine Richtungsänderung vollführen muss oder auf den Volumenstrom behindernde Wiederstände trifft und statt des erst innerhalb der Wirbelkammer umgelenkt, insbesondere beschleunigt, besonders bevorzugt nach radial innen beschleunigt, wird, um dann in einer sich stetig ändernden Wirbelrichtung durch die Wirbelkammer geführt zu werden.

Die oben genannte Ausbildung und Ausrichtung der Eintrittsöffnung ist nicht ausschließlich oder zwingend so zu verstehen, dass die Eintrittsöffnung oder der Endabschnitt selbst in einem tangentialen Bereich der Wirbelkammer oder mit einer tangentialen Ausrichtung bezüglich der Wirbelkammer angeordnet und ausgerichtet sind. Eine solche Anordnung kann zwar hilfreich sein, die bevorzugte Ausführungsform soll aber auch solche Ausgestaltungen umfassen, bei denen die einströmende Milch so in die Wirbelkammer eintritt, dass die Eintrittsrichtung und die aktuelle vektorielle Wirbelrichtung einen wesentlichen parallelen Anteil aufweisen.

Mit anderen Worten ausgedrückt, soll durch die Anordnung der Eintrittsöffnung realisiert werden, dass der über die Eintrittsöffnung in die Wirbelkammer eintretende Volumenstrom der Milch einen Wirbel in der Wirbelkammer antreibt oder mitantreibt.

Die Wirbelrichtung soll in jedem Punkt der Wirbelkammer die vektorielle Bewegungsrichtung oder Hauptbewegungsrichtung der Milch darstellen. So kann beispielsweise bei einer rotationsymmetrischen Wirbelkammer die Wirbelrichtung auf gegenüberliegenden Seiten oder an gegenüberliegenden Enden der Wirbelkammer vektorielle genau entgegengesetzt verlaufen. In diesem Zusammenhang kann die oben beschriebene Ausführungsform auch so verstanden werden, dass im Bereich der Eintrittsöffnung die Milch im Wesentlichen parallel zur vektoriellen Wirbelrichtung in die Wibelkammer eingebracht wird, so dass diese die Strömung innerhalb der Wirbelkammer unterstütz und nicht stört.

In einer weiteren, besonders vorteilhaften Ausgestaltung des Milchmoduls kann vorgesehen sein, dass die Wirbelkammer einen ringförmigen und/oder hohlzylindrischen Querschnitt aufweist. Dies kann beispielsweise über eine kreisförmige oder zylindrische Außenwand der Wirbelkammer und eine kreisförmige oder zylindrische Innenwand der Wirbelkammer erreicht werden. Vorteilhaft kann dazu vorgesehen sein, dass die Innenwand und die Außenwand der Wirbelkammer über ebene oder flache Boden- und/oder Deckelabschnitte der Wirbelkammer miteinander verbunden sind und dadurch insgesamt ein Wirbelkammervolumen einschließen oder begrenzen.

Besonders vorteilhaft kann vorgesehen sein, dass die Eintrittsöffnung und die Austrittsöffnung beide in einer, bevorzugt zylindrischen, Außenwand der Wirbelkammer ausgebildet sind.

Durch eine ringförmige und/oder hohlzylindrische Wirbelkammer kann besonders vorteilhaft die die Milch auf eine im wesentlich ringförmige und/oder spiralförmige Wirbelstrecke geleitet werden, auf der vor dem Erreichen der Austrittsöffnung eine Wechselwirkung mit dem Wärmeträgerfluid stattfinden kann. Dabei wird eine verhältnismäßig lange Wirbelstrecke auf kleinstem Raum ermöglicht und so ein effektiver Wärmeübergang oder Wärmeeintrag in die Milch erreicht.

In einer weiteren, besonders bevorzugten Variante kann vorgesehen sein, dass die Zuleitung außerhalb der Wirbelkammer ein Bauteil zur Erzeugung einer unidirektionalen Strömung in die Wirbelkammer umfasst. Dieses sorgt dafür, dass auf dem Pfad des Wärmeträgerfluids nur eine Strömung in Richtung auf die Wirbelkammer zu erzeugt werden kann und eine umgekehrte Strömung spätestens an dem besagten Bauteil gestoppt oder unterbunden wird. Das Bauteil kann bevorzugt als Rückschlagventil, als Schirmventil (umbrella-valve) oder dergleichen ausgebildet sein.

Das Milchmodul sollte möglichst gut zu reinigen sein, insbesondere, da die geförderte Milch Eiweiß enthält und daher zur Ausbildung von Verkrustungen und Anhaftungen neigt. Zur Reinigung des Milchmoduls ist es besonders sinnvoll, wenn das Milchmodul zwischen Einlass und Auslass mit Reinigungsfluid und/oder Spülfluid durchflossen und dadurch gereinigt werden kann. Mit einem Bauteil zur Erzeugung einer unidirektionalen Strömung, insbesondere einem Rückschlagventil, in der Zuleitung kann sichergestellt werden, dass die gesamte Wirbelkammer einschließlich eines Endabschnitts der Zuleitung, in dem unter Umstünden auch Milch oder Milchreste eingedrungen sein könnten, gespült und gereinigt werden, ohne dass die Gefahr besteht, dass das Reinigungsfluid oder Spülfluid ungewollt oder ungewünscht über die Zuleitung abfließt oder sich in dieser staut.

In einer besonders vorteilhaften Variante des Milchmoduls kann vorgesehen sein, dass das Bauteil zur Erzeugung einer unidirektionalen Strömung, insbesondere das Rückschlagventil, in einer Kammer angeordnet ist, die in radialer Richtung von der Wirbelkammer, insbesondere einer Innenwand der Wirbelkammer, umschlossen ist. Dies kann besonders vorteilhaft zu einer platzsparenden Anordnung des Bauteils zur Erzeugung einer unidirektionalen Strömung innerhalb einer ringförmigen Wirbelkammer und zu einer kompakten Ausgestaltung der Zuleitung führen. Ferner erlaubt dies das Wärmeträgerfluid von radial innen nach radial außen in die Wirbelkammer einzuführen oder einzuleiten, was ebenfalls zu einer besonders platzsparenden Ausgestaltung der Wirbelkammer führt.

Außerdem hat sich gezeigt, dass bei einer Bereitstellung des Wärmeträgerfluids von radial innen nach radial außen die Milch besonders effektiv verwirbelt und in der Wirbelkammer gehalten werden kann, bevor diese über die Austrittsöffnung die Wirbelkammer verlässt.

Eine ebenfalls besonders wünschenswerte Ausgestaltung sieht vor, dass die Zuleitung, bevorzugt zwischen einem Bauteil zur Erzeugung einer unidirektionalen Strömung und der Wirbelkammer, eine Verzweigung in mehrere Kanäle, bevorzugt zwei Kanäle, umfasst. Beispielsweise können ausgehend von einer zur Wirbelkammer innenliegenden Kammer, in der auch das Bauteil zur Erzeugung einer unidirektionalen Strömung angeordnet ist, mehrere Durchbrüche oder mehrere Kanäle durch eine Innenwand der Wirbelkammer verlaufen und so die endseitige oder finale Verbindung zur Wirbelkammer herstellen. Eine Verzweigung der Zuleitung hat dabei den besonderen Vorteil, dass das Wärmeträgerfluid an mehreren Stellen der Wirbelkammer auf die in der Wirbelkammer verwirbelte Milch trifft und somit ein effektiver Wärmeübertrag und auch ein Impulsübertrag stattfinden kann, der dafür sorgt, dass die Milch der Wirbelrichtung folgend durch die Wirbelkammer verwirbelt wird und länger in der Wirbelkammer verbleibt, bevor die Austrittsöffnung erreicht wird. Die Kanäle können vorteilhaft als Bohrungen oder als Spalt ausgebildet sein. Um den Volumenfluss des Wärmeträgerfluids nicht zu groß werden lassen, sind bei einer zunehmenden Anzahl von Kanälen zunehmend kleinere Querschnitt zu realisieren. Da kleinere Querschnitte zunehmend mehr Herstellungs- und Fertigungsaufwand verursachen, sind besonders zwei Kanäle mit Bohrungen mit einem einem Durchmesser von 0.8mm bis 1.2mm besonders vorteilhaft. Die Kanäle können in Wirbelrichtung bevorzugt 180° versetzt oder gegenüberliegend angeordnet sein.

Eine weitere, besonders bevorzugte Variante des Milchmoduls kann vorsehen, dass die Zuleitung oder die Kanäle der Zuleitung mit einer Tangentialkomponente in Wirbelrichtung in die Wirbelkammer münden. Besonders bevorzugt ist die Tangentialkomponente mit einer Radialkomponente, besonders bevorzugt von radial innen nach radial außen, überlagert. Dadurch wird in besonders vorteilhafterweise die Verwirbelung der Milch in der Wirbelkammer unterstützt und so die Verweildauer der Milch in der Wirbelkammer erhöht. Bevorzugt ist jedoch keine vollständig tangentiale Einbringung der Zuleitung oder der Kanäle in die Wirbelkammer vorgesehen, sondern lediglich eine teilweise tangentiale Einbringung/Einmündung. Denn dadurch kann in besonders vorteilhafterweise auch erreicht werden, dass die bereits in der Wirbelkammer befindliche Milch das eintretende Wärmeträgerfluid mitreißt und dadurch ein besserer Wärmeübertrag stattfindet.

In einer ebenfalls besonders vorteilhaften Variante des Milchmoduls kann vorteilhaft vorgesehen sein, dass die Eintrittsöffnung einen größeren Durchmesser aufweist, als die Austrittsöffnung. Dadurch wird zwar ein gewisser Überdruck im Volumenstrom erforderlich, der von der Milchpumpe bereitgestellt werden muss, gleichzeitig hat dies jedoch den Vorteil, dass die Milch länger in der Wirbelkammer verbleibt und somit effektiver erwärmt werden kann. Der Überdruck ist aber betragsmäßig immer noch sehr gering im Vergleich zu den (Unter-) Druckverhältnissen in einer Venturidüse.

Weiterhin kann besonders vorteilhaft vorgesehen sein, dass entlang einer senkrecht auf der Wirbelrichtung stehenden Wirbelachse die Eintrittsöffnung versetzt gegenüber, insbesondere oberhalb, der Austrittsöffnung angeordnet ist. Durch den Versatz zwischen Eintrittsöffnung und Austrittsöffnung entlang der Wirbelachse kann ebenfalls die Dauer oder der Grad der Verwirbelung der Wirbelkammer verbessert und erhöht werden. Besonders vorteilhaft kann vorgesehen sein, dass die Eintrittsöffnung eine Ausrichtung rechtwinklig zur Wirbelachse aufweist. So dass die eintretende Milch nicht bereits auf die Austrittsöffnung ausgerichtet in die Wirbelkammer austritt, sondern dass turbulente Strömungseigenschaften innerhalb der Wirbelkammer und/oder die Gewichtskraft dazu führen, dass die Milch zum Teil so abgelenkt wird, dass diese zur Austrittöffnung gelangt. Dabei hat sich herausgestellt, dass die grundsätzliche Orientierung der Wirbelachse nicht maßgeblich ist für die Funktionalität der Wirbelkammer und den Verbleib der Milch in der Wirbelkammer. Mit anderen Worten ausgedrückt hat sich gezeigt, dass die Einwirkung der Gewichtskraft der Milch auf den Verbleib in der Wirbelkammer verhältnismäßig gering bis nicht vorhanden ist. So kann die Wirbelkammer funktionieren, wenn die Eintrittsöffnung in Richtung des Gewichtskraftvektors oberhalb der Austrittsöffnung angeordnet ist. Alternativ kann jedoch auch vorgesehen sein, dass die Eintrittsöffnung im Wesentlichen senkrecht zum Gewichtskraftvektor neben der Austrittsöffnung angeordnet ist. Dies bedeutet mit anderen Worten ausgedrückt, dass die Wirbelkammer sowohl liegend als auch stehend angeordnet werden kann. Dies erlaubt die flexible Anpassung des Milchmoduls an die baulichen Gegebenheiten oder Vorgaben einer Getränkezubereitungsvorrichtung.

In einer weiteren besonders bevorzugten Variante des Milchmoduls kann vorgesehen sein, dass die Zuleitung oder wenigstens ein Kanal der Zuleitung entlang der Wirbelachse auf der Höhe der Eintrittsöffnung angeordnet ist. Dies kann besonders vorteilhaft die Verwirbelung der Milch innerhalb der Wirbelkammer unterstützen, in dem entlang der Wirbelrichtung relativ kurz nach Eintritt der Milch in die Wirbelkammer und auf gleicher Höhe bezogen auf die Wirbelachse das Wärmeträgerfluid mit der Milch in Kontakt kommt. Vorteilhaft kann der Versatz zwischen Zuleitung oder Kanal einerseits und Eintrittsöffnung zwischen 5° und 60° in Wirbelrichtung betragen.

Eine weitere vorteilhafte Ausführungsform des Milchmoduls kann vorsehen, dass der Durchmesser der Wirbelkammer, insbesondere der Durchmesser der Außenwand der Wirbelkammer kleiner als 20 Millimeter, insbesondere kleiner als 12 Milimerter, ist und/oder das von der Wirbelkammer umschlossene Wirbelkammervolumen kleiner als 5 Milliliter, bevorzugt weniger als 1,5 Milliliter, ist. Die geringe Größe und/oder das geringe Volumen der Wirbelkammer führt/führen dazu, dass das Erwärmen der Milch auf kleinstem Raum sehr effektiv stattfinden kann. Damit wird der benötigte Bauraum optimiert und Wärmeverluste minimiert.

In einer besonders vorteilhaften Ausgestaltung des Milchmoduls kann vorgesehen sein, dass die Milchpumpe als Rollenpumpe ausgestaltet ist. Rollenpumpen sind auch als Schlauchpumpen, Schlauchquetschpumpen oder als Peristaltikpumpen bekannt. Derartige Pumpen haben, insbesondere bei der Förderung von Lebensmitteln, den Vorteil, dass keine Komponenten der Pumpe und auch keine Schmierstoffe oder sonstigen Materialien oder Betriebsstoffe, abgesehen von dem durch die Rollenpumpe geführten Schlauch, mit dem zu fördernden Gut oder dem zu fördernden Fluid in Berührung kommen. Außerdem haben derartige Pumpen noch weitere Vorteile, wie beispielsweise eine einfache Umkehr der Förderrichtung sowie eine lange Lebensdauer und eine gute Verschleißfestigkeit. Lediglich der durch die Pumpe geführte Schlauch muss aufgrund der wiederkehrenden elastischen Verformung als Ermüdungs- oder Verschleißteil betrachtet werden.

In einer besonders vorteilhaften Ausführungsform kann vorgesehen sein, dass die Wirbelkammer in ein Pumpengehäuse der Milchpumpe, insbesondere in ein Pumpengehäuse einer Milch-Rollenpumpe, integriert ist. Dies kann weiterhin zu einer bauraumsparenden und kompakten Realisierung des Milchmoduls führen.

Das oben genannte Problem wird auch durch eine Getränkezubereitungsvorrichtung, insbesondere eine Kaffee- und/oder Espressomaschine, mit einer Brühgruppe zum Aufbrühen und/oder Auslaugen von Getränkesubstrat, bevorzugt Kaffeebohnenmehl, und mit einem Getränkeauslass, der mit einem Ausgang der Brühgruppe fluidleitend verbunden ist, gelöst, welche ein Milchmodul gemäß einer der vorangehend beschriebenen Ausführungsform umfasst.

Durch die Integration des Milchmoduls in eine erfindungsgemäße Getränkezubereitungsvorrichtung kann sowohl für die Milchpumpe als auch für eine Bereitstellungseinheit des Wärmeträgerfluids, beispielsweise in Form eines Thermoblocks, mit deutlich geringeren Arbeitsdrücken gearbeitet werden. Ferner kann das Milchmodul besonders platzsparend realisiert werden und einen sehr leisen Betrieb, insbesondere in Vergleich mit sonstigen Betriebsgeräuschen der Getränkezubereitungsvorrichtung, ermöglichen. Schließlich erreicht die Getränkezubereitungsvorrichtung eine sehr effektive Wärmeübertragung auf die aufzuwärmende Milch auf kleinstem Raum.

Die Erfindung löst die oben genannte Aufgabe auch durch ein Verfahren zum Betrieb eines Milchmoduls für Getränkezubereitungsvorrichtungen, insbesondere Kaffee- und/oder Espressomaschinen, bei dem Milch erwärmt wird und bei dem ein Volumenstrom von Milch mit einer Milchpumpe von einem Einlass zu einem Auslass des Milchmoduls gefördert wird. Dabei ist erfindungsgemäß vorgesehen, dass mittels der Milchpumpe lediglich der Volumenstrom erzeugt wird und insbesondere keine Erwärmung und/oder Aufschäumung bewirkt wird, wobei zusätzlich zur Milchpumpe eine Wirbelkammer vorgesehen ist, deren Eintrittsöffnung fluidleitend mit dem Einlass und deren Austrittsöffnung fluidleitend mit dem Auslass des Milchmoduls verbunden ist, wobei, insbesondere im Betrieb des Milchmoduls, über eine Zuleitung zur Wirbelkammer ein Wärmeträgerfluid, bevorzugt Wasserdampf und/oder heißes Wasser in die Wirbelkammer eingeleitet wird, sodass der die Wirbelkammer durchfließende Volumenstrom innerhalb der Wirbelkammer durch das Wärmeträgerfluid verwirbelt und dabei erwärmt wird.

Das Verfahren ermöglicht in erfinderischer Weise eine leise und sehr effektive Erwärmung der Milch auf kleinstem Raum bei insgesamt verhältnismäßig geringen Drücken für das Wärmeträgerfluid und die geförderte Milch. Nach dem Erwärmen in der Wirbelkammer verlässt die Milch samt teilweise darin eingebettetem Wärmeträgerfluid die Wirbelkammer über die Austrittsöffnung und kann zu einem Auslass gefördert werden oder fließen, von wo aus die Milch in ein Getränkegefäß abgegeben werden kann.

Vorteilhafte Ausgestaltungen der vorliegenden Erfindung werden nachfolgend anhand den rein schematischen, Ausführungsbeispielen zeigenden Zeichnungen erläutert werden.

Darin zeigen:
- Fig. 1:: eine perspektivische Schnittdarstellung durch einen Teil eines erfindungsgemäßen Milchmoduls;
- Fig. 2:: einen vergrößerten Ausschnitt der perspektivischen Schnittdarstellung der Fig. 1.

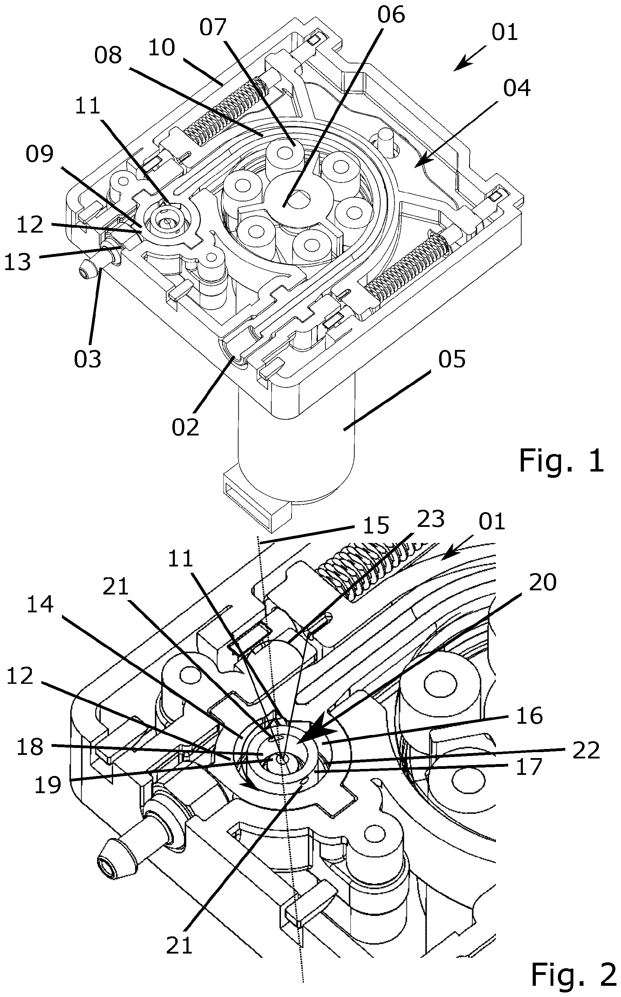

Die Fig. 1 zeigt einen perspektivischen Schnitt durch ein erfindungsgemäßes Milchmodul 01 oder zumindest durch einen Teil eines erfindungsgemäßen Milchmoduls 01.

In der Fig. 1 ist ein Einlass 02 und ein Auslass 03 des Milchmoduls beispielhaft dargestellt. Der Einlass 02 und der Auslass 03 können aber gegenüber der Darstellung der Fig. 1 auch verlängert oder erweitert ausgebildet sein. So kann beispielsweise der Einlass 02 an einer Übergangsschnittstelle zu einem Milchvorratsbehälter angeordnet sein. Der Auslass 03 kann beispielsweise von dem dargestellten Auslass 03 zu einem Milchauslass einer nicht dargestellten Getränkezubereitungsvorrichtung verlängert sein, von dem aus die Milch in ein Getränkegefäß abgegeben wird. Das Milchmodul umfasst eine Milchpumpe 04, die im Beispiel der Fig. 1 als Rollenpumpe ausgebildet und dargestellt ist. Über einen Getriebemotor 05 wird ein Rotor 06 angetrieben, der wiederum mit dem Rotor bewegliche Rollen oder Gleitschuhe antreibt. Durch die Rollen 07 wird ein Milchschlauch 08 - je nach Position verengt, abgeschnürt oder erweitert. Dies führt zur Förderung des Fluids, nämlich der Milch, innerhalb des Milchschlauchs 08 von dem Einlass 02 zum Auslass 03.

Das Milchmodul 01 umfasst ferner eine Wirbelkammer 09 die im Beispiel der Fig. 1 in ein Gehäuse 10 der Milchpumpe 04 integriert ist. Im Beispiel der Fig. 1 wird die Wirbelkammer 09 im Wesentlichen durch Teile des Milchschlauchs 08 und/oder des Gehäuses 10 gebildet. Die Wirbelkammer 09 verfügt über eine Eintrittsöffnung 11 und eine Austrittsöffnung 12. Die Eintrittsöffnung 11 ist mit dem Einlass 02 über den Milchschlauch 08 fluidleitend verbunden. Die Austrittsöffnung 12 ist über ein Kopplungsstück 13 mit dem Auslass 03 fluidleitend verbunden.

Bezüglich der Details der Wirbelkammer 09 wird auf die Darstellung der Fig. 2 und die dazugehörige, nachfolgende Beschreibung verwiesen.

Wie in der Fig. 2 zu erkennen ist, ist die Eintrittsöffnung 11 so ausgebildet und ausgerichtet, dass der Volumenstrom der Milch tangential zu einer Wirbelrichtung in die Wirbelkammer 09 eintritt oder einmündet. Damit treibt der Volumenstrom der Milch einen Wirbel in der Wirbelkammer 09 an oder unterstützt diesen. Die tangentiale Ausrichtung der Eintrittsöffnung 11 zur Wirbelrichtung kann zwar durch eine tangentiale Anordnung bezogen auf die Wirbelkammer realisiert werden, es sind aber auch andere Anordnungen möglich, bei denen die unterstützende, Wirkung und tangentiale Beimischung der Milch in einen entstehenden oder bestehenden Wirbel erreicht werden können. Die Wirbelrichtung ist die vektorielle Bewegungsrichtung in jedem Punkt entlang des Wirbelpfeils 14. Durch die Wirbelrichtung wird auch eine Wirbelachse 15 definiert/realisiert, die senkrecht auf der Wirbelrichtung und dementsprechend senkrecht zum Wirbelpfeil 14 verläuft.

Die Wirbelkammer 09 wird radial außen durch eine Außenwand 16 und innen durch eine Innenwand 17 begrenzt. Bodenseitig werden Außenwand 16 und Innenwand 17 durch einen Boden 22 begrenzt. Eine dem Boden gegenüberliegende Decke zur Begrenzung der Wirbelkammer 09 ist in der Schnittdarstellung der Fig. 2 nicht zu erkennen. Innenwand 17 und Außenwand 16 sind beide zylindrisch und konzentrisch geformt, so dass die Wirbelkammer einen ringförmigen oder hohlzylindrischen Querschnitt aufweist.

Stattdessen ist erkennbar, dass in einer gegenüber der Wirbelkammer 09 radial innenliegenden Kammer 18 ein Bauteil zur Erzeugung einer unidirektionalen Strömung in Form eines Rückschlagventil 19 angeordnet ist. Die Kammer kann ebenfalls zylindrisch geformt sein und entlang der Wirbelachse gleich hoch wie die Wirbelkammer ausgebildet sein. Das Rückschlagventil 19 bildet - wie auch die Kammer 18 - einen Teil einer Zuleitung 20 aus, über die ein Wärmeträgerfluid, bevorzugt Wasserdampf und/oder Heißwasser, in die Wirbelkammer eingebracht werden kann, um dort die Milch aufzuwirbeln und/oder zu erwärmen.

Das Wärmeträgerfluid tritt im Beispiel der Fig. 2 durch das Rückschlagventil 19 in die Kammer 18 ein. Ausgangsseitig zu der Kammer 18 ist die Zuleitung 20 verzweigt ausgebildet und durch zwei Kanäle 21 realisiert die sich durch die Innenwand 17 der Wirbelkammer erstrecken und schließlich in der Wirbelkammer 09 münden. Die Kanäle 21 weisen eine Tangentialkomponente zur Wirbelrichtung auf.

Alternativ ist auch eine funktionierende Wirbelkammer möglich, in der die Kanäle 21 in anderen Ausrichtungen ausgebildet sind, zum Beispiel zentrisch, symmetrisch, von oben und/oder von unten entlang der Wirbelachse 15 sowie Kombinationen hieraus.

In der Darstellung der Fig. 2 ist erkennbar, dass die Austrittsöffnung 12 in Bodennähe angeordnet ist und dass die Eintrittsöffnung 11 bezogen auf die Wirbelachse 15 oberhalb der Austrittsöffnung 12 angeordnet ist. Weiter ist erkennbar, dass der Kanal 21 oder beide Kanäle 21 in Richtung der Wirbelachse 15 etwa auf der gleichen Höhe wie die Eintrittsöffnung 11 angeordnet sind. Zudem ist in der Fig. 2 ein Winkelversatz 23 eingezeichnet, der darstellt, dass in der Wirbelrichtung die Eintrittsöffnung 11 und der nächste Kanal 21 bezogen auf den Mittelpunkt der Wirbelkammer 09 oder Kammer 18 etwa 35° versetzt sind. Dies erlaubt eine besonders effektive Weiterleitung der Milch innerhalb der Wirbelkammer 09, nachdem diese in die Wirbelkammer 09 durch die Eintrittsöffnung 11 eingeleitet wurde.

Wenn das Milchmodul 01 im Anschluss an einen Betrieb gespült oder gereinigt wird, kann Reinigungsfluid in die Wirbelkammer 09 und von dort aus über die Kanäle 21 auch in die Kammer 18 gelangen. Ein Abfluss aus der Kammer 18 oder ein weiteres Eindringen in die Zuleitung 20 ist jedoch aufgrund des Rückschlagventils 19 nicht möglich.

Sofern im Betrieb die Milchpumpe 04 Milch durch den Milchschlauch zur Eintrittsöffnung 11 der Wirbelkammer fördert und gleichzeitig über die Zuleitung 20 Wärmeträgerfluid über die Kanäle 21 in die Wirbelkammer 09 eingeführt wird, führt dies dazu, dass die Milch entlang des Wirbelpfeils 14 innerhalb der Wirbelkammer verwirbelt wird und dabei ein Wärmeübertrag in die Milch bewirkt wird. Wenn die Milch nach einer entsprechenden Verweildauer innerhalb der Wirbelkammer 09 über die Austrittsöffnung 12 austritt, hat die Milch, je nach Menge, Volumenfluss und/oder Temperatur des bereitgestellten Wärmeträgerfluids Wärme aufgenommen und/oder Blasen des Wärmeträgerfluid aufgenommen, sodass die Milch mit einer höheren Temperatur und einem größeren Volumen aus der Austrittsöffnung 12 austritt und zum Auslass 03 des Milchmoduls 01 geleitet wird. Von dort aus kann die erwärmte Milch als Getränk ausgegeben werden oder als Zutat eines Getränks diesem beigemischt werden. Gegebenenfalls kann die erwärmte Milch zudem vor der Ausgabe aufgeschäumt werden, wozu bekannte Aufschäumvorrichtungen, wie beispielweise ein Membranschäumer oder ein mechanischer Schäumer zum Einsatz kommen kann.

### Bezugszeichen

- 01: Milchmodul
- 02: Einlass
- 03: Auslass
- 04: Milchpumpe
- 05: Getriebemotor
- 06: Rotor
- 07: Rollen
- 08: Milchschlauch
- 09: Wirbelkammer
- 10: Gehäuse
- 11: Eintrittsöffnung
- 12: Austrittsöffnung
- 13: Kopplungsstück
- 14: Wirbelpfeil
- 15: Wirbelachse
- 16: Außenwand
- 17: Innenwand
- 18: Kammer
- 19: Rückschlagventil
- 20: Zuleitung
- 21: Kanal
- 22: Boden
- 23: Winkelversatz

## Patentansprüche

1. Milchmodul für Getränkezubereitungsvorrichtungen, insbesondere Kaffee- und/oder Espressomaschinen, zur Erwärmung von Milch mit einer Milchpumpe (04) zur Förderung eines Volumenstroms von einem Einlass (02) zu einem Auslass (03) des Milchmoduls (01), **dadurch gekennzeichnet,**
**dass** die Milchpumpe (04) lediglich dazu eingerichtet ist den Volumenstrom zu erzeugen, wobei zusätzlich zur Milchpumpe (04) eine Wirbelkammer (09) vorgesehen ist, wobei der Einlass (02) fluidleitend mit einer Eintrittsöffnung (11) der Wirbelkammer (09) und der Auslass (03) fluidleitend mit einer Austrittsöffnung (12) der Wirbelkammer (09) verbunden ist und eine Zuleitung (20) in die Wirbelkammer (09) mündet, mit der eine Wärmeträgerfluid in die Wirbelkammer (09) einleitbar ist, so dass der die Wirbelkammer (09) durchfließende Volumenstrom durch das Wärmeträgerfluid verwirbelt und dabei erwärmt wird.

2. Milchmodul nach Anspruch 1,
**dadurch gekennzeichnet, dass** die Eintrittsöffnung (11) so ausgebildet und ausgerichtet ist, dass der Volumenstrom tangential zu einer Wirbelrichtung in die Wirbelkammer (09) eintritt.

3. Milchmodul nach Anspruch 1 oder 2,
**dadurch gekennzeichnet,**
**dass** die Wirbelkammer (09) eine ringförmigen Querschnitt aufweist.

4. Milchmodul nach einem der Ansprüche 1 bis 3,
**dadurch gekennzeichnet,**
**dass** die Zuleitung (20) außerhalb der Wirbelkammer (09) ein Bauteil zur Erzeugung einer unidirektionalen Strömung, bevorzugt ein Rückschlagventil (19), umfasst.

5. Milchmodul nach Anspruch 4,
**dadurch gekennzeichnet,**
**dass** das Bauteil zur Erzeugung einer unidirektionalen Strömung in einer Kammer (18) angeordnet ist, die in radialer Richtung von der Wirbelkammer (09), insbesondere einer Innenwand (17) der Wirbelkammer (09), umschlossen ist.

6. Milchmodul nach einem der vorangehenden Ansprüche,
**dadurch gekennzeichnet,**
**dass** die Zuleitung (20), bevorzugt zwischen einem Bauteil zur Erzeugung einer unidirektionalen Strömung und der Wirbelkammer (09), eine Verzweigung in mehrere Kanäle (21), bevorzugt zwei Kanäle (21), umfasst.

7. Milchmodul nach einem der vorangehenden Ansprüche,
**dadurch gekennzeichnet,**
**dass** die Zuleitung (20) oder die Kanäle (21) mit einer Tangentialkomponente in Wirbelrichtung in die Wirbelkammer (09) münden.

8. Milchmodul nach einem der vorangehenden Ansprüche,
**dadurch gekennzeichnet,**
**dass** die Eintrittsöffnung (11) einen größeren Durchmesser aufweist als die Austrittsöffnung (12).

9. Milchmodul nach einem der vorangehenden Ansprüche,
**dadurch gekennzeichnet,**
**dass** entlang einer senkrecht auf der Wirbelrichtung stehenden Wirbelachse (15) die Eintrittsöffnung (11) versetzt gegenüber, insbesondere oberhalb, der Austrittsöffnung (12) angeordnet ist.

10. Milchmodul nach einem der vorangehenden Ansprüche,
**dadurch gekennzeichnet,**
**dass** die Zuleitung (20) oder wenigstens ein Kanal (21) entlang der Wirbelachse (15) auf der Höhe der Eintrittsöffnung (11) angeordnet ist.

11. Milchmodul nach einem der vorangehenden Ansprüche,
**dadurch gekennzeichnet,**
**dass** ein Durchmesser der Wirbelkammer (09) kleiner als 20mm ist und/oder das Wirbelkammervolumen kleiner als 5ml ist.

12. Milchmodul nach einem der vorangehenden Ansprüche,
**dadurch gekennzeichnet,**
**dass** die Milchpumpe (04) als Rollenpumpe ausgebildet ist.

13. Milchmodul nach Anspruch 12,
**dadurch gekennzeichnet,**
**dass** die Wirbelkammer (09) in ein Pumpengehäuse (10) der Milchpumpe (04) integriert ist.

14. Getränkezubereitungsvorrichtung, insbesondere Kaffee- und/oder Espressomaschine, mit einer Brühgruppe zum Aufbrühen und/oder Auslaugen von Getränkesubstrat, bevorzugt Kaffeebohnenmehl, wobei ein Ausgang der Brühgruppe mit einem Getränkeauslass fluidleitend verbunden ist,
**gekennzeichnet durch**
ein Milchmodul (01) nach einem der Ansprüche 1 bis 13

15. Verfahren zum Betrieb eines Milchmoduls für Getränkezubereitungsvorrichtungen, insbesondere Kaffee- und/oder Espressomaschinen, bei dem Milch erwärmt wird und bei dem ein Volumenstrom von Milch mit einer Milchpumpe (04) von einem Einlass (02) zu einem Auslass (03) des Milchmoduls gefördert wird,
**dadurch gekennzeichnet**,
mittels der Milchpumpe (04) lediglich der Volumenstrom erzeugt wird, und insbesondere keine Erwärmung und/oder Aufschäumung bewirkt wird, und wobei zusätzlich zur Milchpumpe (04) eine Wirbelkammer (09) vorgesehen ist, wobei der Einlass (02) fluidleitend mit einer Eintrittsöffnung (11) der Wirbelkammer (09) und der Auslass (03) fluidleitend mit einer Austrittsöffnung (12) der Wirbelkammer (09) verbunden ist und über eine Zuleitung (20) zur Wirbelkammer (09) ein Wärmeträgerfluid, bevorzugt Wasserdampf und/oder heißes Wasser, in die Wirbelkammer (09) eingeleitet wird, so dass der die Wirbelkammer (09) durchfließende Volumenstrom innerhalb der Wirbelkammer (09) durch das Wärmeträgerfluid verwirbelt und dabei erwärmt wird.
